# EUROPEAN PATENT APPLICATION

(11) **EP 2 582 089 A1**
(43) Date of publication of application: **17.04.2013**
(21) Application number: 10853107.0
(22) Date of filing: 16.09.2010
(51) Int. Cl.: H04L 12/24

(54) **SYSTEM AND METHOD FOR IMPLEMENTING AUTOMATIC CONFIGURATION FOR EQUIPMENTS**

(30) Priority: 13.06.2010 CN 201010199863
(71) Applicant: ZTE Corporation, Shenzhen, Guangdong 518057 (CN)
(72) Inventor: CHEN, Zheng, Shenzhen Guangdong 518057 (CN)
(74) Representative: Jansen, Cornelis Marinus
(86) International application number: PCT/CN2010/077014
(87) International publication number: WO 2011/156998

(57) **Abstract**

A system for implementing automatic configuration for equipment is provided by the disclosure. The system includes a Dynamic Host Configuration Protocol (DHCP) server (101), empty-configured equipment (102) and a configuration server (103), wherein the configuration server (103) is configured to interact, based on a private protocol, with the empty-configured equipment (102) continuously till the upgrade of version files and configuration files to be updated for the empty-configured equipment (102) is finished. A method for implementing automatic configuration for equipment is also provided by the disclosure. The method includes that any empty-configured equipment (102) in the network interacts with the DHCP server (101) based on DHCP protocol, and after obtaining the Internet Protocol (IP) address required by the empty-configured equipment (102) and the relevant parameter of the configuration server (103), the empty-configured equipment (102) interacts, based on the private protocol, with the configuration server (103) continuously till the upgrade of the version file and the configuration file to be updated for the empty-configured equipment (102) is finished. According to the system and method provided by the disclosure, empty-configured equipment (102) can be supported and automatic configuration can be realized in batches for the equipment.

## Description

### TECHNICAL FIELD

The disclosure relates to automatic configuration technology, and more particularly to a system and method for implementing automatic configuration in batches for equipment.

### BACKGROUND

In telecommunication network deployment, a large number of pieces of equipment involved due to implementation or expansion are usually empty-configured, and corresponding updating operations need to be performed to configure the empty-configured equipment. The updating operations include the following contents:
updating of equipment versions: default versions of empty-configured equipment generally fail to satisfy requirements, and equipment versions need to be updated to satisfy current network requirements;
updating of equipment configurations: configuration templates are prepared, parameter modification is performed manually for each piece of equipment one by one, and configuration scripts are upgraded so as to configure basic Simple Network Management Protocol (SNMP) parameters and alarming parameters, and to realize functions including routing access.

Currently, the updating operations above are configured manually. These updating operations need overall consideration and arrangement, and are highly-repetitive, thus it is very easy to get wrong to perform the updating operations by applying the current manual configuration method. In addition, since the updating operations need to be performed on equipment locally while a plurality of pieces of equipment are distributed at different physical positions, operators need to run around when performing the updating operations if the current manual configuration method is adopted, thus labour costs are greatly wasted.

In existing network management technologies, managed equipment has generally undergone parameter initialization instead of being empty-configured. Since parameter initialization has been performed for equipment, equipment parameters can be read by a network management system, versions and configuration information can be displayed, and automatic updating can be performed according to user requirements. It can be seen from above that empty-configured equipment fails to be supported in the existing network management technologies. In a word, the related art has some drawbacks, in which either only a manual configuration method can be applied, which wastes labour costs and results in a high error rate, or automatic updating can not be applicable to empty-configured equipment although it can be carried out. Currently, there is an urgent need to find an automatic equipment configuration solution which can support empty-configured equipment while implementing automatic configuration in batches for equipment.

### SUMMARY

In view of this, the main purpose of the disclosure is to provide a system and method for implementing automatic configuration for equipment, which can support empty-configured equipment while implementing automatic configuration in batches for equipment.

To realize the purpose above, the technical solution of the disclosure is implemented by the following way:
a system for implementing automatic configuration for equipment, the system includes: a Dynamic Host Configuration Protocol (DHCP) server, empty-configured equipment and a configuration server, wherein
the DHCP server is configured to interact, based on a DHCP protocol, with any empty-configured equipment in a network, and provide an Internet Protocol (IP) address required by the empty-configured equipment and a relevant parameter of the configuration server;
the empty-configured equipment is configured to, after obtaining the IP address and the relevant parameter of the configuration server, interact with the configuration server based on a private protocol; and
the configuration server is configured to, based on the private protocol, interact with the empty-configured equipment continuously till upgrade of a version file and a configuration file to be updated for the empty-configured equipment is finished.

Wherein the configuration server may be further configured to, based on a private protocol, interact with the empty-configured equipment; the private protocol message may be an automatic configuration message;
in case of version file upgrade, the automatic configuration message includes the following types: a version file obtaining message and a version file obtaining result message;
in case of configuration file upgrade, the automatic configuration message includes the following types: a configuration file obtaining message, a configuration file obtaining result message, a configuration upgrade message, and a configuration file upgrade result message; and
in both cases of version file upgrade and configuration file upgrade, the automatic configuration message includes the following types: a version file obtaining message, a version file obtaining result message, a configuration file obtaining message, a configuration file obtaining result message, a configuration upgrade message, and a configuration file upgrade result message.

Wherein the empty-configured equipment may further include an upgrade processing module; the configuration server may further include a Socket connection pool, a logical control module and a storage module, wherein
the upgrade processing module may be configured to perform message interaction with the Socket connection pool;
the Socket connection pool may be configured to perform message interaction with the upgrade processing module continuously till the upgrade of the version file and the configuration file to be updated for the empty-configured equipment is finished,
the logical control module may be configured to control a state change, and according to the state change, notify the Socket connection pool to send a corresponding message; and
the storage module is configured to store the version file and the configuration file to be updated for the empty-configured equipment.

Wherein the logical control module may be further configured to control an equipment state change and a service state change; the storage module may be a File Transfer Protocol (FTP) server/Trivial File Transfer Protocol (TFTP) server.

A method for implementing automatic configuration for equipment, the method includes: interacting, by any empty-configured equipment in a network, with a Dynamic Host Configuration Protocol (DHCP) server based on a DHCP protocol; and after obtaining an Internet Protocol (IP) address required by the empty-configured equipment and a relevant parameter of a configuration server, interacting, by the empty-configured equipment, with the configuration server continuously based on a private protocol till upgrade of a version file and a configuration file to be updated for the empty-configured equipment is finished.

Wherein the interacting, by the empty-configured equipment, with the configuration server based on a private protocol may include:
sending, by the empty-configured equipment, a link establishment request message to the configuration server automatically according to the relevant parameter of the configuration server to establish a connection-oriented Transmission Control Protocol (TCP) connection with the configuration server, after the empty-configured equipment obtains the IP address of the empty-configured equipment and the relevant parameter of the configuration server.

Wherein after establishing the TCP connection, the interacting, by the empty-configured equipment, with the configuration server based on a private protocol may further include: when determining that the empty-configured equipment belongs to a management range and versions are inconsistent, sending, by the configuration server, a version file obtaining message to the empty-configured equipment to notify the empty-configured equipment to obtain the version file to be updated; after the empty-configured equipment receives the version file obtaining message, sending, by the empty-configured equipment, a version file obtaining result message to the configuration server to feed back a version file obtaining result.

Wherein the empty-configured equipment is restarted after obtaining the version file successfully; and after the empty-configured equipment is restarted successfully, the interacting, by the empty-configured equipment, with the configuration server based on a private protocol may further include: sending, by the configuration server, a configuration file obtaining message to the empty-configured equipment and notifying the empty-configured equipment to obtain a configuration file; sending, by the empty-configured equipment, a configuration file obtaining result message to the configuration server to feed back a configuration file obtaining result after the empty-configured equipment receives the configuration file obtaining message.

Wherein after the empty-configured equipment obtains the configuration file successfully, the interacting, by the empty-configured equipment, with the configuration server based on a private protocol may further include: sending, by the configuration server, a configuration upgrade message to the empty-configured equipment to notify the empty-configured equipment to upgrade the configuration file; after the empty-configured equipment receives the configuration upgrade message, sending, by the empty-configured equipment, a configuration file upgrade result message to the configuration server to feed back a configuration file upgrade result.

Wherein if the configuration file upgrade result is successful upgrade, the step in which, after the configuration file is upgraded successfully, then the interacting, by the empty-configured equipment, with the configuration server based on a private protocol may further include: sending, by the configuration server, a link disconnection message to the empty-configured equipment to end message interaction with the empty-configured equipment.

Any empty-configured equipment in the network of the disclosure interacts, based on DHCP protocol, with the DHCP server, and after obtaining the IP address required by the empty-configured equipment and the relevant parameter of the configuration server, the empty-configured equipment interacts, based on the private protocol, with the configuration server continuously till the upgrade of the version file and the configuration file to be updated for the empty-configured equipment is finished.

By applying the disclosure, empty-configured equipment can be supported and automatic configuration can be realized in batches for the equipment. The automatic configuration is performed in batches, thus reducing labour costs, and reducing the error rate of manual updating. Empty-configured equipment can be supported, which is the extension of the field of automatic configuration of empty-configured equipment.

### BRIEF DESCRIPTION OF THE DRAWINGS

Fig. 1 is a schematic diagram illustrating an application scenario of automatic configuration of empty-configured equipment according to the disclosure;
Fig. 2 is an architecture schematic diagram of a system embodiment according to the disclosure;
Fig. 3 is a schematic diagram illustrating a service state of equipment configuration management according to the disclosure;
Fig. 4 is a schematic diagram illustrating an equipment state change during equipment configuration according to the disclosure; and
Fig. 5 is an implementation flowchart of a method embodiment according to the disclosure.

### DETAILED DESCRIPTION

The basic idea of the disclosure is that: any empty-configured equipment in a network interacts, based on a DHCP protocol, with a DHCP server, and after obtaining an IP address required by the empty-configured equipment and a relevant parameter of a configuration server, the empty-configured equipment interacts, based on a private protocol, with the configuration server continuously till upgrade of a version file and a configuration file to be updated for the empty-configured equipment is finished.

The implementation of the technical solution is further described in details below in combination with the accompanying drawings.

The solution of the disclosure is to implement automatic installation configuration for empty-configured equipment in a network and finish in batches the upgrading processes during which the empty-configured equipment automatically obtains required updated version files and configuration files after being started.

The automatic equipment configuration solution described by the disclosure is applied to empty-configured equipment and mainly includes the following contents in the terms of a system:

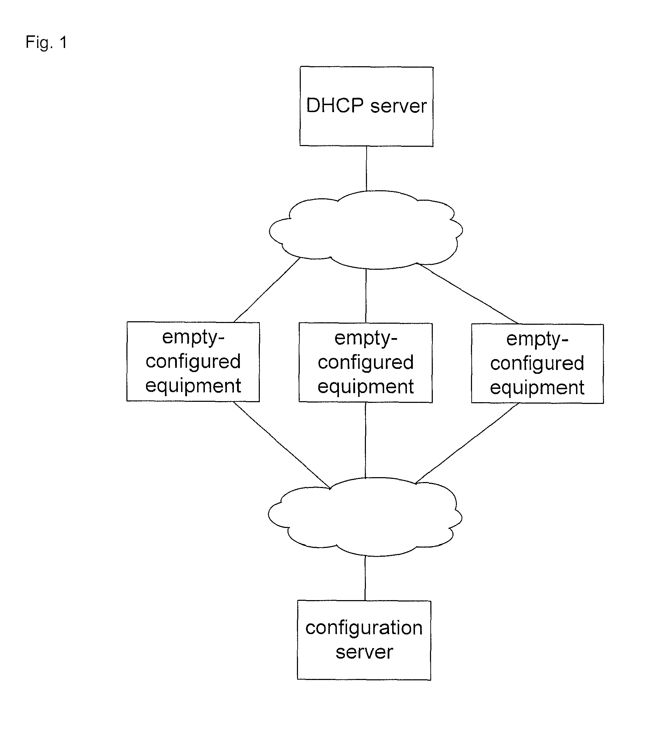

The version file and configuration file to be updated, which are required by empty-configured equipment, are stored in a configuration server. The empty-configured equipment may interact with the configuration server via a private protocol to obtain the updated version file and configuration file from the configuration server. For example, as shown in Fig. 1, a network is provided with multiple pieces of empty-configured equipment which interact with a DHCP server first via a DHCP protocol; after obtaining an IP address of any one of the empty-configured equipment and a relevant parameter of a configuration server by the DHCP protocol server, any one of the empty-configured equipment will, according to the relevant parameter of the configuration server, initiate a link establishment request to the configuration server and interact with the configuration server via a private protocol continuously till upgrade of a version file and a configuration file to be updated is finished. Thus, automatic upgrading of running versions and basic configuration to be updated for the empty-configured equipment in batches can largely help users to reduce the maintenance workload and reduce the cost wasted by manual updating in the related art.

The automatic equipment configuration solution described by the disclosure is applied to empty-configured equipment and mainly includes the following contents in terms of a method:
1. pre-configuring empty-configured equipment to be deployed at a network management client;
2. starting a connection pool service and waiting for empty-configured equipment to initiate a link establishment request automatically;
3. after the empty-configured equipment is started, establishing, by the empty-configured equipment, a link with a configuration server;
4. implementing a message interaction between the empty-configured equipment and the configuration server via a private message, mainly referring to implementing the upgrade of a version file and a configuration file to be updated for the empty-configured equipment; and
5. when the configuration server determines that all messages have been interacted, ending the whole process of the automatic configuration in batches. The state change of all phases from the start of configuration to the completion of configuration can be implemented by a state machine in the configuration server.

To sum up, by comparing the disclosure with the related art, it can be learned that, the related art either employs a manual configuration method which wastes labour costs and results in a high error rate, or only applies automatic equipment installation configuration to terminal equipment driving, equipment data initialization and updating, and initialization of various application servers etc., but has not realized automatic installation configuration for empty-configured equipment in batches and the connection from the empty-configured equipment to network. What the disclosure provides is the function of implementing automatic installation configuration for empty-configured equipment in batches and connecting the empty-configured equipment to network, which has not been implemented by the related art, so as to realize a plug-and-play function which is achieved due to automatic installation of empty-configured equipment. In addition, a private protocol message format adopted during the interaction between the configuration server and the empty-configured equipment is redefined to facilitate control operation of a user during an upgrade process in the form of a Graphical User Interface (GUI), wherein the plug-and-play function refers to that: when a network connection is normal, once started successfully, empty-configured equipment starts to establish a link with a configuration server and is able to be connected to a network and put into use as soon as all upgrade processes are finished.

The disclosure will be described below with examples.

Before describing the embodiments specifically, a pre-operation is described here first. The pre-operation mainly includes the following contents:
1. a DHCP server uses Option 10 to store a server address and uses Option 22 to store the portion number of a Socket connection pool; a message is transmitted to an upgrade processing module (the upgrade processing module will be described specifically in the system embodiment below) in empty-configured equipment through a Socket connection pool to establish a link with a configuration server; after the link is established, the empty-configured equipment performs message interaction with the configuration server through a private protocol;
2. when the message interaction is performed through the private protocol, a redefined private protocol message format is as shown in the following Table 1. Table 1 illustrates the redefined private protocol message format. The redefined private protocol message may be also called an automatic configuration message.

**Table 1**

| 1 byte | 1 byte | 1 byte | 1 byte |
|---|---|---|---|
| MSG_TYPE | DATA_NUM | LENGTH | |
| DATA1_INFO | | | |
| DATA2_INFO | | | |
| ...... | | | |

The content of each item in Table 1 is described as follows:
MSG_TYPE: 1 byte, representing a message type;
DATA_NUM: 1 byte, representing the number of DATA;
LENGTH: 2 bytes, representing the total length of DATA;
DATA: representing information data included in a message; each DATA should be an integral multiple of four bytes.

Definitions of formats of the DATA field in Table 1, such as DATA1_INFO and DATA2_INFO are as shown in Table 2 which is a table listing the formats of the DATA field.

**Table 2**

| 1 byte | 1 byte | 1 byte | 1 byte |
|---|---|---|---|
| DATA_TYPE | DATA_LEN | VALUE_LEN | RESERVED |
| DATA_VALUE | | | |

The content of each item in Table 2 is described as follows:
DATA_TYPE: 1 byte, representing a DATA type, and the specific definition is as shown in the following Table 3 which is a table listing the types of DATA_TYPE;
DATA_LEN: 1 byte, representing the total length of the DATA;
VALUE_LEN: 1 byte, representing the actual length of DATA_VALUE; the integer is 4 and a string type is the length of an actual string;
RESERVED: 1 byte, representing reserved bytes;
DATA_VALUE: representing the value of DATA and should be brought up to an integral multiple of four bytes.

**Table 3**

| DATA_TYPE | Length | Type | Description |
|---|---|---|---|
| 1 | 6 | char[6] | Media Access Control (MAC) address |
| 2 | String length | String | Equipment version |
| 3 | String length | String | Equipment type |
| 4 | 4 | Integer | The identifier is FTP or TFTP? |
| 5 | 4 | Integer | FTP/TFTP server address |
| 6 | String length | String | Directory path |
| 7 | String length | String | File name |
| 8 | String length | String | User name |
| 9 | String length | String | Password |
| 10 | 4 | Integer | Execution results of file downloading: 0. Success and successful verification; 1. Success but verification error, 2. Failure |
| 11 | 4 | Integer | Execution results: 0. Success; 1. Failure |
| 12 | 4 | Integer | Cyclic Redundancy Check (CRC) code |
| 13 | 4 | Integer | Operation types: 0. Download a version file, 1. Download a configuration file, 2. Upload a log file |
| 14 | 4 | Integer | A percentage of the execution progress (0 to 100), 0 represents: in progress. |

The message types used during message interaction between empty-configured equipment and a configuration server by applying a private protocol are described as follows:
a1. The equipment sends a link establishment request message containing basic information to the configuration server.

Note: the first message sent by the empty-configured equipment to the configuration server after establishing a TCP connection with the configuration server contains basic information including the MAC, the version and the equipment type etc. of the empty-configured equipment.

The configuration server uses the basic information to determine whether the empty-configured equipment is in a management range, whether a version file needs to be upgraded and whether a configuration file needs to be upgraded etc. The specific message formats adopted are described as follows:
MSG_TYPE = 1
DATA_NUM = 3
DATA1: (1) MAC
DATA2: (2) version
DATA3: (3) equipment type
a2. Link disconnection message

Note: it is a link disconnection message sent by the empty-configured equipment to the configuration server or a link disconnection message sent by configuration server to the empty-configured equipment.

Before upgrading the configuration file immediately, the empty-configured equipment sends the link disconnection message to the configuration server to request a link disconnection; the configuration server sends the link disconnection message to the empty-configured equipment to request a link disconnection if necessary. The specific message formats adopted are described as follows:
MSG_TYPE = 2
DATA_NUM = 0
DATA: none
a3. The configuration server sends a version file obtaining message to the empty-configured equipment.

Note: the configuration server requires the empty-configured equipment to download a version file from an FTP/TFTP server and simultaneously notifies the empty-configured equipment of information including an FTP/TFTP download address, a path, a file name, a user name and a password etc..

After receiving the obtaining message, the empty-configured equipment downloads the version file from a corresponding FTP/TFTP server. The specific message formats adopted are described as follows:
MSG_TYPE = 3
DATA_NUM = 7
DATA1: (4) FTP/TFTP type, 0 representing FTP and 1 representing TFTP
DATA2: (5) FTP/TFTP address
DATA3: (6) path
DATA4: (7) file name
DATA5: (8) user name
DATA6: (9) password
DATA7: (12) CRC check code
a4. The configuration server sends a configuration file obtaining message to the empty-configured equipment.

Note: the configuration server requires the empty-configured equipment to download a configuration file from an FTP/TFTP server and simultaneously notifies the empty-configured equipment of a download address, a path, a user name and a password.

After receiving the obtaining message, the empty-configured equipment downloads the configuration filed from a corresponding FTP/TFTP server. The specific message formats adopted are described as follows:
MSG_TYPE = 4
DATA_NUM = 7
DATA1: (4) FTP/TFTP type, 0 representing FTP and 1 representing TFTP
DATA2: (5) FTP/TFTP address
DATA3: (6) path
DATA4: (7) file name
DATA5: (8) user name
DATA6: (9) password
DATA7: (12) CRC check code
a5. The equipment sends a version file obtaining result message to the configuration server.

Note: the empty-configured equipment sends the version file obtaining result message to the configuration server, including: 0 representing success and successful verification; 1 representing success but verification error; 2 representing failure.

After receiving the result message, the configuration server determines the subsequent operation according to the results in the DATA field. The specific message formats adopted are described as follows:
MSG_TYPE = 5
DATA_NUM = 1
DATA1: (10) execution result of file downloading: 0 representing success and successful verification; 1 representing success but verification error; 2 representing failure.
a6. The configuration server sends a restarting message to the equipment.

Note: a restarting message sent by the configuration server to the equipment and a restarting acknowledgement message fed back by the equipment are included, and the equipment needs to be restarted immediately. The specific message formats adopted are described as follows:
MSG_TYPE = 6
DATA_NUM = 0
DATA1: none
a7. The equipment sends a configuration file obtaining result message to the configuration server.

Note: the equipment sends the configuration file obtaining result message to the configuration server, including: 0 representing success and successful verification; 1 representing success but verification error; 2 representing failure.

After receiving the result message, the configuration server determines the subsequent operation according to the results in the DATA field. The specific message formats adopted are described as follows:
MSG_TYPE = 7
DATA_NUM = 1
DATA1: (10) execution result of file downloading: 0 representing success and successful verification; 1 representing success but verification error; 2 representing failure.
a8. The configuration server sends a configuration upgrade message to the equipment.

Note: the configuration server sends the configuration upgrade message to the equipment. After receiving the configuration message, the equipment determines the subsequent operation according to the upgrade type. The specific applied message formats are described as follows:
MSG_TYPE = 8
DATA_NUM = 0
DATA1: none
a9. The configuration server sends a log upload message to the equipment.

Note: the configuration server requires the equipment to upload a log file about the execution result of the configuration to a designated FTP/TFTP server and simultaneously notifies the equipment of an upload target address, a path, a user name and a password.

After receiving the log message, the equipment needs to upload a generated log file to a designated FTP/TFTP server. The specific message formats adopted are described as follows:
MSG_TYPE = 9
DATA_NUM = 6
DATA1: (4) FTP/TFTP type, 0 representing FTP and 1 representing TFTP
DATA2: (5) FTP/TFTP address
DATA3: (6) path
DATA4: (7) file name
DATA5: (8) user name
DATA6: (9) password
a10. The equipment sends a result message of log uploading to the configuration server.

Note: the equipment sends the result message of log uploading to the configuration server, including: success and failure.

After receiving the result message, the configuration server performs processing including alarming etc. according to requirements. The specific message formats adopted are described as follows:
MSG_TYPE = 10
DATA_NUM = 1
DATA1: (11) execution result: 0 representing success and 1 representing failure
a11. The equipment sends a configuration file upgrade result message carrying equipment information to the configuration server.

Note: the configuration file upgrade result message is sent to the configuration server after the equipment establishes a connection with the configuration server over again. The specific message formats adopted are described as follows:
MSG_TYPE = 11
DATA_NUM = 4
DATA1: (1) MAC
DATA2: (2) version
DATA3: (3) equipment type
DATA4: (11) execution result: 0 representing success and 1 representing failure
a12. An upgrade acknowledgement message is sent by the equipment to the configuration server

Note: after receiving the upgrade message sent by the configuration server, the equipment immediately returns an acknowledgement to the configuration server to indicate that an operation has been delivered, upgrade is waited, and that there are subsequent operations of reporting an upgrade result and uploading a log. The specific message formats adopted are described as follows:
MSG_TYPE = 12
DATA_NUM = 1
DATA1: (11) execution result: 0. success, 1. failure
a13. The equipment sends an execution progress message periodically to the configuration server.

Note: when executing operations persisting for relatively long periods of time, including uploading and downloading etc., the equipment reports the current progress to the configuration server every 30s. The specific message formats adopted are described as follows:
MSG_TYPE = 14
DATA_NUM = 2
DATA1: (13) types of executed operations: 0 representing downloading a version file; 1 representing downloading a configuration file; 2 representing uploading a log file.
DATA2: (14) execution progress, a number from (0 to 100), 0 representing in progress, and without a percentage; (0 to 100) representing a number obtained by multiplying the percentage by 100, e.g. 25 represents that the current progress is 25%.

Others: the progress message is sent only during an operation process. If the execution is finished, a corresponding execution result message is sent.

### System embodiment:

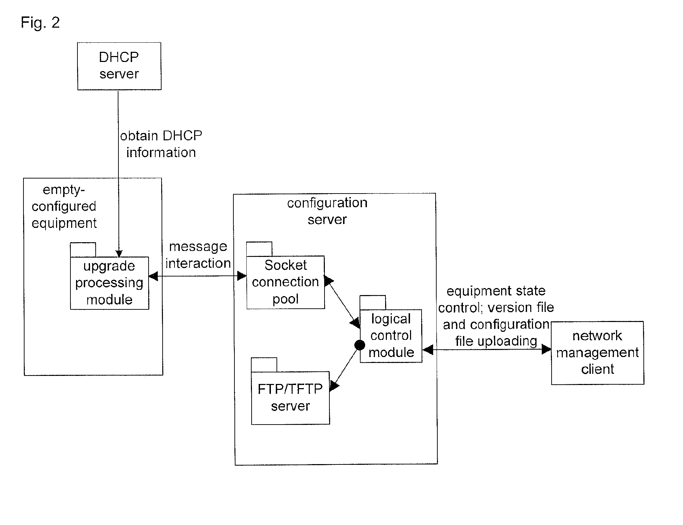

Fig. 2 shows a schematic diagram of a system structure of the present embodiment, including a network management client, a DHCP server, empty-configured equipment and a configuration server.

The network management client is configured to indicate empty-configured equipment by taking MAC as an identifier, configure preparation parameters required by the empty-configured equipment and indicate a state change of the empty-configured equipment.

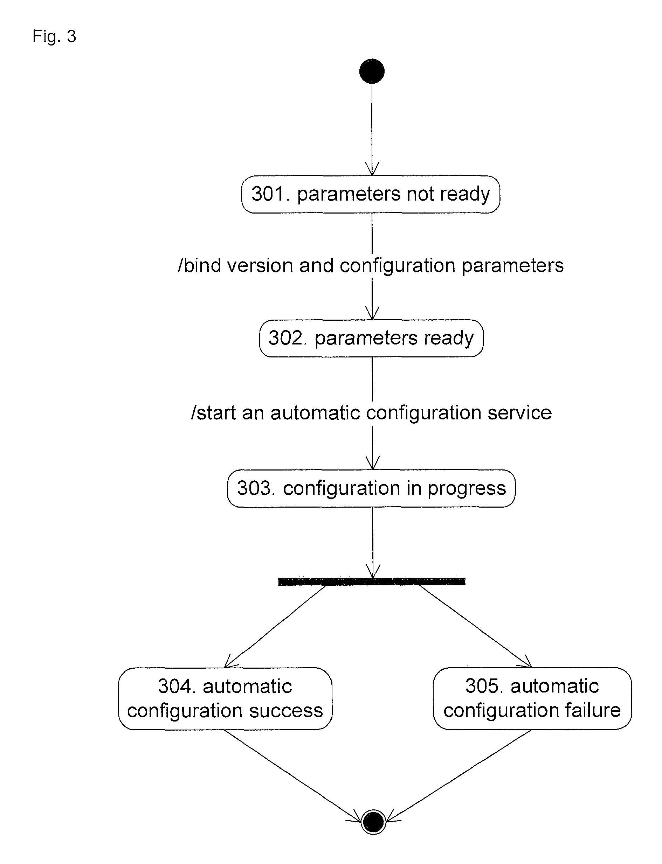

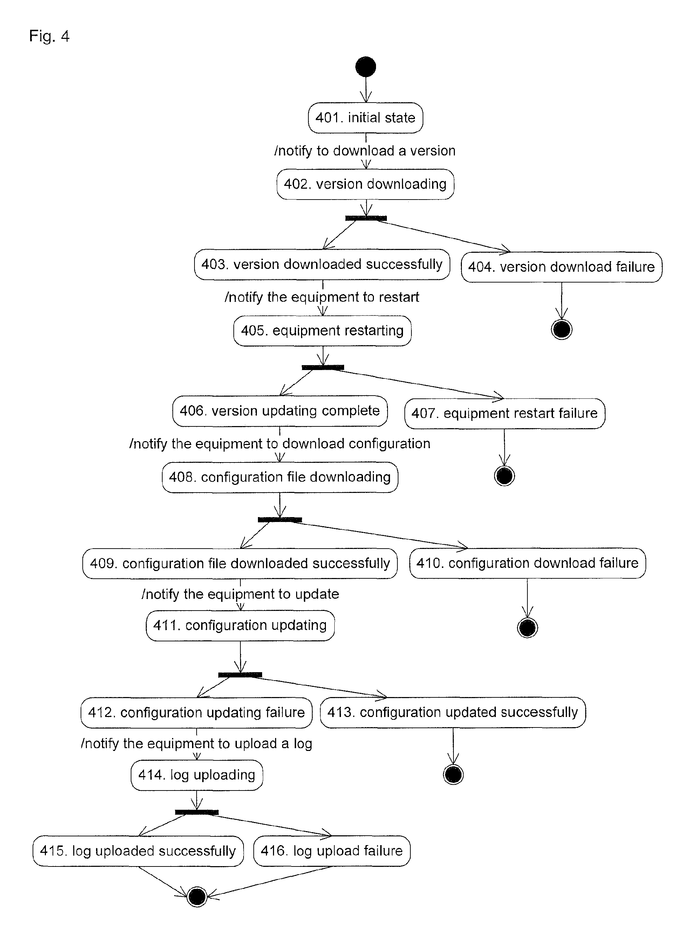

The configuration server is configured to perform automatic configuration interaction with the empty-configured equipment. The configuration server may be specifically composed of three parts, i.e. a logical control module, a Socket connection pool and a storage module; wherein the logical control module is configured to maintain a state machine and control the state change of the empty-configured equipment; where the state change is as shown in Fig. 3 and Fig. 4, including a service state change in Fig. 3 and an equipment control state change in Fig. 4, and the state change is matched with message interaction to control the sending of different messages under different states to realize automatic configuration. The Socket connection pool is configured to manage a Socket session with the empty-configured equipment dynamically. The storage module is configured to store a log file uploaded by the equipment after the upgrade of a version file and a configuration file to be updated for the empty-configured equipment is failed. The storage module may be specifically an FTP/TFTP server.

The DHCP server is configured to assign an IP address of the empty-configured equipment and a relevant parameter of the configuration server.

The empty-configured equipment is configured to realize functions including: obtaining the IP address and the relevant parameter of the configuration server from the DHCP server, performing message interaction with the configuration server, obtaining a version file and a configuration file to be updated from an FTP/TFTP server, and uploading a log, upgrading the version file and the configuration file; and feeding back an upgrade result, etc. The empty-configured equipment may specifically include a processing module required to finish upgrade of the empty-configured equipment. The processing module implements interaction between the empty-configured equipment and the configuration server by interacting with the Socket connection pool.

It should be noted here that: in a process in which the configuration server performs automatic configuration for the empty-configured equipment during message interaction, the two parties which perform the message interaction should be required to follow a redefined private protocol which needs to specify a series of messages to notify each phase during the automatic configuration process. The message formats should at least include: a message type, a message length, 0 or multiple data fields, wherein a data field includes a data type, a data length and data content.

### Method embodiment:

The process of a method of an embodiment of the disclosure includes the following three parts: preparation of equipment parameters in network management, equipment state control, and interaction between empty-configured equipment and a configuration server; descriptions are given as follows.
1. An MAC address is used for identifying empty-configured equipment in a network management system, and a file importing method is mainly applied. The major contents of an imported file of the empty-configured equipment include: configuration parameters and topology management parameters, wherein the configuration parameters include an MAC address, an equipment type, a set operation, a version file path, a configuration script path, a file transfer protocol, the number of times of file transfer retry, and restarting timeout (taking minute as a unit); and the topology management parameters include: an equipment name, an equipment group, an equipment management IP, and a subnet mask, wherein the MAC address is necessary; the set operation include version upgrade only, configuration upgrade only, version and configuration upgrade, and is flexibly applied to equipment upgrade; the version file and script file path are absolute addresses specially designated by users; and the file transfer protocol include FTP and TFTP.
2. Generally, after the empty-configured equipment is added to network management, the initial management service state of the equipment is "301 parameters not ready", as shown in Fig. 3; the control state of the equipment is "401 initial state", as shown in Fig. 4, and a version binding operation and a configuration script binding operation need to be performed. Version binding may be obtained locally or from a network management version repository and the configuration may be also obtained locally or configured in batches by configuration templates.

After the parameters are bound, the management service state of the equipment is changed into "302 parameters ready", as shown in Fig. 3. For the time being, an automatic configuration service is started and message interaction between the empty-configured equipment and the configuration server is waited.
3. When obtaining the IP address and the relevant parameter of the configuration server from the DHCP server, the empty-configured equipment will send a Socket link establishment request message, i.e. the a1 message above, and the management service state of the equipment will be changed into "303 configuration in progress" at the moment, as shown in Fig. 3.
4. A network manager detects whether or not the empty-configured equipment is in the management range, and if it discovers that the version of the empty-configured equipment is inconsistent with the target version number, then it sends the a3-class message to notify the empty-configured equipment to obtain a version, and then the control state of the empty-configured equipment is changed from "401 initial state" into "402 version downloading", as shown in Fig. 4. The empty-configured equipment sends the a13-class message every half a minute to notify the downloading progress, and sends the a5-class message to feed back an obtaining result after the version is downloaded. If the downloading is successful, then the equipment control state is changed into "403 version downloaded successfully", as shown in Fig. 4. The configuration server sends a message 6 to notify the equipment to restart, and the equipment control state is changed into "405 equipment restarting", otherwise, the equipment control state is "404 version download failure", as shown in Fig. 4, and the a2 message will be sent. After the empty-configured equipment is restarted successfully, the a1-class message will be sent. After the message is received by the configuration server, the equipment control state is changed into "406 version updating complete", otherwise, the restarting is timeout, and the state is "407 equipment restart failed", as shown in Fig. 4.
5. The configuration server sends the a4-class message to notify the equipment to obtain the configuration file. The equipment control state is changed into "408 configuration file downloading", as shown in Fig. 4. The empty-configured equipment sends the a13-class message every half a minute to notify the download progress, and sends the a7-class message to feed back a configuration file obtaining result after the configuration file is downloaded. If the downloading is successful, the control state is changed into "409 configuration file downloaded successfully", as shown in Fig. 4. The configuration server sends the a8-class message to notify the empty-configured equipment to upgrade configuration, and the equipment control state is changed into "411 configuration updating", otherwise, the equipment control state is "410 configuration download failed", as shown in Fig. 4, and the a2-class message will be sent;
6. The empty-configured equipment sends the a12-class message to the configuration server to acknowledge the upgrade message and then sends the a2-class message, and starts a configuration updating process. After the configuration updating is finished, the empty-configured equipment sends the a11-class message to notify the upgrade result to the configuration server. If the configuration updating is successful, the configuration server sends the a2-class message to the empty-configured equipment, and the equipment control state is changed into "413 configuration updated successfully", as shown in Fig. 4, and the management service state is changed into "304 automatic configuration successful", as shown in Fig. 3. Otherwise, the equipment control state is changed into "412 configuration updating failed", as shown in Fig. 4, and the management service state is changed into "305 automatic configuration failed", as shown in Fig. 3.
7. After the configuration updating is failed, the configuration server sends the a9-class message to the empty-configured equipment to notify it to upload a log file. The equipment control state is changed into "414 log uploading", as shown in Fig. 4. The empty-configured equipment sends the a13-class message every half a minute to notify the log upload progress, and after the log is uploaded, sends the a10-class message to feed back a log file upload result. If the uploading is successful, then the equipment control state is changed into "415 log uploaded successfully". otherwise, the equipment control state is changed into "416 log upload failed", as shown in Fig. 4, and finally the configuration server sends the a2-class message. It should be noted here that manual intervention is required in the case of the states "404 version download failed", "407 equipment restart failed and "416 log upload failed" in Fig. 4.

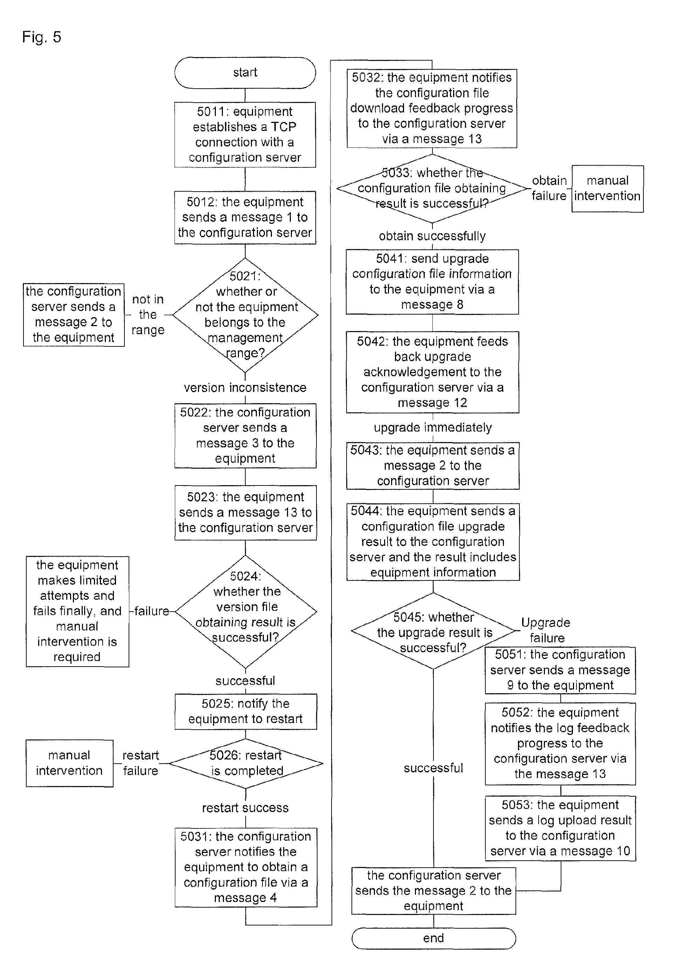

Specifically, as shown in Fig. 5, the process of the method includes the following steps:
Step 5011: empty-configured equipment establishes a TCP connection with a configuration server;
Step 5012: the empty-configured equipment sends a message 1 to the configuration server. The message 1 here is the a1-class message and includes basic information of the empty-configured equipment;
Step 5021: whether or not the empty-configured equipment belongs to the management range is determined; if it does not belong to the management range, the configuration server sends a message 2 to the empty-configured equipment; if the empty-configured equipment belongs to the management range and versions are inconsistent, Step 5022 is executed. The message 2 here is the a2-class message;
Step 5022: the configuration server sends a message 3 to the empty-configured equipment to notify it to obtain a version file to be updated. The message 3 here is the a3-class message;
Step 5023: the empty-configured equipment sends a message 13 to the configuration server to notify a version feedback progress. The message 13 here is the a13-class message;
Step 5024: it is determined whether the version file obtaining result in a message 5 indicates successful obtaining; if it indicates successful obtaining, Step 5025 is executed; otherwise, manual intervention is required if the empty-configured equipment finally fails after limited attempts. The message 5 here is the a5-class message;
Step 5025: the empty-configured equipment is notified to restart by a message 6. The message 6 here is the a6-class message;
Step 5026: it is determine whether the restart is completed. If the restart is successful, Step 5031 is executed; otherwise, manual intervention is performed;
Step 5031: the configuration server notifies the empty-configured equipment to obtain a configuration file via a message. The message 4 here is the a4-class message;
Step 5032: the empty-configured equipment notifies the configuration file download feedback progress to the configuration server via a message 13;
Step 5033: it is determined whether the file obtaining result in a message 7 indicates successful obtaining, if it indicates successful obtaining, Step 5041 is executed; otherwise, manual intervention is required. The message 7 here is the a7-class message;
Step 5041: the configuration server notifies the empty-configured equipment to upgrade the configuration file via a message 8;
Step 5042: the empty-configured equipment feeds back upgrade acknowledgement to the configuration server via a message 12. The message 12 here is the a12-class message;
Step 5043: the empty-configured equipment sends a message 2 to the configuration server. Here, the message 2 is the a2-class message;
Step 5044: the empty-configured equipment sends a configuration file upgrade result to the configuration server via a message 11. The message 11 includes basic information of the equipment. The message 11 here is the a11-class message;
Step 5045: it is determined whether the upgrade result is a success, if it not a success, Step 5051 is executed; if it is a success, the configuration server sends the message 2 to the empty-configured equipment and then finishes the current automatic configuration process. The message 2 here is the a2-class message;
Step 5051: the configuration server uploads log information via a message 9. The message 9 here is the a9-class message;
Step 5052: the empty-configured equipment notifies the log feedback progress to the configuration server via the message 13. The message 13 here is the a13-class message; and
Step 5053: the empty-configured equipment sends a log upload result to the configuration server via a message 10. The message 10 here is the a10-class message.

After performing the Step 5052, the configuration server sends the message 2 to the empty-configured equipment and then finishes the current automatic configuration process. The message 2 here is the a2-class message.

What are described above are only preferred embodiments of the disclosure and should not be used to limit the protection scope of the disclosure.

## Claims

1. A system for implementing automatic configuration for equipment, comprising: a Dynamic Host Configuration Protocol (DHCP) server, empty-configured equipment and a configuration server, wherein
the DHCP server is configured to, based on DHCP protocol, interact with any empty-configured equipment in a network, and provide an Internet Protocol (IP) address required by the empty-configured equipment and a relevant parameter of the configuration server;
the empty-configured equipment is configured to, after obtaining the IP address and the relevant parameter of the configuration server, interact with the configuration server based on a private protocol; and
the configuration server is configured to, based on the private protocol, interact with the empty-configured equipment continuously till upgrade of a version file and a configuration file to be updated for the empty-configured equipment is finished.

2. The system according to claim 1, wherein the configuration server is further configured to, based on the private protocol, interact with the empty-configured equipment, the private protocol message being an automatic configuration message;
in case of version file upgrade, the automatic configuration message comprises following types: a version file obtaining message and a version file obtaining result message;
in case of configuration file upgrade, the automatic configuration message comprises following types: a configuration file obtaining message, a configuration file obtaining result message, a configuration upgrade message, and a configuration file upgrade result message; and
in both cases of version file upgrade and configuration file upgrade, the automatic configuration message comprises following types: a version file obtaining message, a version file obtaining result message, a configuration file obtaining message, a configuration file obtaining result message, a configuration upgrade message, and a configuration file upgrade result message.

3. The system according to claim 1, wherein the empty-configured equipment further comprises an upgrade processing module; the configuration server further comprises a Socket connection pool, a logical control module and a storage module; wherein
the upgrade processing module is configured to perform message interaction with the Socket connection pool;
the Socket connection pool is configured to perform message interaction with the upgrade processing module continuously till the upgrade of the version file and the configuration file to be updated for the empty-configured equipment is finished;
the logical control module is configured to control a state change, and according to the state change, notify the Socket connection pool to send a corresponding message; and
the storage module is configured to store the version file and the configuration file to be updated for the empty-configured equipment.

4. The system according to claim 3, wherein the logical control module is further configured to control an equipment state change and a service state change; the storage module is a File Transfer Protocol (FTP) server/ Trivial File Transfer Protocol (TFTP) server.

5. A method for implementing automatic configuration for equipment, comprising:
interacting, by any empty-configured equipment in a network, with a Dynamic Host Configuration Protocol (DHCP) server based on DHCP protocol; and
after obtaining an Internet Protocol (IP) address required by the empty-configured equipment and a relevant parameter of a configuration server, interacting, by the empty-configured equipment, with the configuration server continuously based on a private protocol till upgrade of a version file and a configuration file to be updated for the empty-configured equipment is finished.

6. The method according to claim 5, wherein the interacting, by the empty-configured equipment, with the configuration server based on a private protocol comprises:
sending, by the empty-configured equipment, a link establishment request message to the configuration server automatically according to the relevant parameter of the configuration server to establish a connection-oriented Transmission Control Protocol (TCP) connection with the configuration server, after the empty-configured equipment obtains the IP address of the empty-configured equipment and the relevant parameter of the configuration server.

7. The method according to claim 6, wherein after establishing the TCP connection, the interacting, by the empty-configured equipment, with the configuration server based on a private protocol further comprises: when determining that the empty-configured equipment belongs to a management range and versions are inconsistent, sending, by the configuration server, a version file obtaining message to the empty-configured equipment to notify the empty-configured equipment to obtain the version file to be updated; after the empty-configured equipment receives the version file obtaining message, sending, by the empty-configured equipment, a version file obtaining result message to the configuration server to feed back a version file obtaining result.

8. The method according to claim 7, wherein the empty-configured equipment is restarted after obtaining the version file successfully; and after the empty-configured equipment is restarted successfully, the interacting, by the empty-configured equipment, with the configuration server based on a private protocol further comprises: sending, by the configuration server, a configuration file obtaining message to the empty-configured equipment and notifying the empty-configured equipment to obtain a configuration file; sending, by the empty-configured equipment, a configuration file obtaining result message to the configuration server to feed back a configuration file obtaining result after the empty-configured equipment receives the configuration file obtaining message.

9. The method according to claim 8, wherein after the empty-configured equipment obtains the configuration file successfully, the interacting, by the empty-configured equipment, with the configuration server based on a private protocol further comprises: sending, by the configuration server, a configuration upgrade message to the empty-configured equipment to notify the empty-configured equipment to upgrade the configuration file; after the empty-configured equipment receives the configuration upgrade message, sending, by the empty-configured equipment, a configuration file upgrade result message to the configuration server to feed back a configuration file upgrade result.

10. The method according to claim 9, wherein if the configuration file upgrade result is successful upgrade, then the interacting, by the empty-configured equipment, with the configuration server based on a private protocol further comprises: sending, by the configuration server, a link disconnection message to the empty-configured equipment to end message interaction with the empty-configured equipment.
